# DEMANDE DE BREVET EUROPEEN

(11) **EP 4 307 143 A1**
(43) Date de publication de la demande: **17.01.2024**
(21) Numéro de dépôt: 23184505.8
(22) Date de dépôt: 10.07.2023
(51) Int. Cl.: G06F 21/52, G06F 21/73

(54) **PROCEDE ET CIRCUIT POUR LA VERIFICATION DE L'INTEGRITE D'UN LOGICIEL**

(30) Priorité: 12.07.2022 FR 2207125
(71) Demandeur: Commissariat à l'énergie atomique et aux énergies alternatives, 75015 Paris (FR)
(72) Inventeur: THEVENON, Pierre-Henri, 38054 Grenoble Cedex 09 (FR); HELY, David, 38054 Grenoble Cedex 09 (FR)
(74) Mandataire: Cabinet Beaumont

(57) **Abrégé**

La présente description concerne un procédé de vérification, par un circuit de vérification, de l'intégrité d'un logiciel :
- le chargement (401) du logiciel dans une première mémoire volatile ;
- le calcul (402) d'une première valeur de vérification par le circuit de vérification ;
- le calcul (403) d'une deuxième valeur de vérification en appliquant une fonction physiquement non clonable à la première valeur de vérification ;
- la comparaison (404), par le circuit de vérification, de la deuxième valeur de vérification avec une valeur de référence ; et
- s'il est déterminé que la deuxième valeur de vérification diffère de la valeur de référence, la génération d'un signal d'avertissement (405) en sortie du circuit de vérification.

## Description

### Domaine technique

La présente description concerne le domaine des procédés et circuits pour la sécurité de circuits électroniques, et en particulier un circuit et un procédé permettant de vérifier l'intégrité d'un logiciel du circuit.

### Technique antérieure

Les dispositifs électroniques comprenant un système embarqué IoT (Internet des Objets, de l'anglais « Internet of Things ») sont sujets aux attaques. Par exemple, l'attaquant peut perturber le système en utilisant des techniques d'injection de fautes pour modifier le flot d'exécution d'un code, ou bien exploiter des failles logicielles pour modifier le code, le détourner ou injecter des codes malveillants. Un code malveillant injecté modifie par exemple des logiciels de fonctionnement du dispositif tel que des codes applicatifs pouvant compromettre le fonctionnement, la sécurité, ainsi que la confidentialité de données sensibles du dispositif.

Différentes techniques ont été développées afin de vérifier qu'un logiciel donné est correctement exécuté. Ces techniques sont par exemple réalisées de manière statique, avant l'exécution du logiciel, ou de manière dynamique, directement lors de l'exécution du logiciel.

Ces techniques reposent sur la comparaison entre des valeurs de référence et des valeurs calculées sur la base des codes et/ou logiciel exécutés. Pour plus de sécurité, une ou plusieurs clefs cryptographiques peuvent être utilisées afin de crypter les valeurs de référence. Si une attaque permet à ces clefs cryptographiques d'être dévoilées, la sécurité de tout le dispositif est donc compromise. De plus, l'usage de chiffrement conduit à une augmentation de la consommation énergétique et du temps de calcul.

### Résumé de l'invention

Il existe un besoin d'améliorer les méthodes de vérification de l'intégrité des logiciels exécutés par un dispositif électronique.

Un mode de réalisation pallie tout ou partie des inconvénients des méthodes de vérification connus.

Un mode de réalisation prévoit un procédé de vérification, par un circuit de vérification, de l'intégrité d'un logiciel :
- le chargement du logiciel dans une première mémoire volatile ;
- le calcul d'une première valeur de vérification par le circuit de vérification ;
- le calcul d'une deuxième valeur de vérification en appliquant une fonction physiquement non clonable à la première valeur de vérification ;
- la comparaison, par le circuit de vérification, de la deuxième valeur de vérification avec une valeur de référence ; et
- s'il est déterminé que la deuxième valeur de vérification diffère de la valeur de référence, la génération d'un signal d'avertissement en sortie du circuit de vérification.

Selon un mode de réalisation, le procédé ci-dessus comprend en outre, avant la vérification de l'intégrité du logiciel, l'obtention de la valeur de référence en appliquant la fonction physiquement non clonable à une valeur générée à partir du logiciel.

Selon un mode de réalisation, l'obtention de la valeur de référence en appliquant la fonction physiquement non clonable comprend le stockage d'une image de la fonction physiquement non clonable dans une mémoire d'un dispositif externe au circuit de vérification, et la génération de la valeur de référence à partir du logiciel et de l'image, le procédé comprenant en outre le stockage de la valeur de référence dans une deuxième mémoire non volatile.

Selon un mode de réalisation, l'obtention de la valeur de référence est effectuée lors du chargement du logiciel dans la première mémoire et dans lequel la valeur de référence est stockée dans la première mémoire.

Selon un mode de réalisation, l'obtention de la valeur de référence se fait par application de la fonction physiquement non clonable à une valeur d'entrée basée sur la valeur générée à partir du logiciel et une valeur aléatoire.

Selon un mode de réalisation, la valeur aléatoire est égale à une première valeur lors d'un premier démarrage et égale à une deuxième valeur, différente de la première valeur, lors d'un deuxième démarrage du circuit de vérification.

Selon un mode de réalisation, le procédé ci-dessus comprend en outre, avant le chargement du logiciel dans la première mémoire, l'ajout d'une instruction de vérification au logiciel déclenchant le calcul de la première valeur de vérification.

Selon un mode de réalisation, le circuit de vérification implémente un compteur configuré pour indiquer qu'un délai après le chargement du logiciel dans la première mémoire est atteint, le circuit de vérification étant configuré pour vérifier, une fois le délai atteint, que l'instruction de vérification a été exécutée.

Selon un mode de réalisation, la fonction physiquement non clonable est une fonction physiquement non clonable robuste, propre au circuit de vérification.

Un mode de réalisation prévoit un circuit comprenant :
- une première mémoire volatile dans laquelle est chargé le logiciel ;
- un processeur configuré pour calculer une première valeur de vérification ;
- un circuit à fonction physiquement non clonable configuré pour générer une deuxième valeur de vérification basée sur la première valeur de vérification ; et
- un circuit de vérification configuré pour vérifier l'intégrité d'un logiciel en comparant la deuxième valeur de vérification avec une valeur de référence et en générant, en sortie, un signal d'avertissement si la deuxième valeur de vérification diffère de la valeur de référence.

Selon un mode de réalisation, le circuit à fonction physiquement non clonable est en outre configuré pour, avant la vérification de l'intégrité du logiciel, générer la valeur de référence sur la base d'une valeur générée par le processeur et à partir du logiciel.

Selon un mode de réalisation, la génération de la valeur de référence par le circuit à fonction physiquement non clonable comprend le stockage d'une image du circuit à fonction physiquement non clonable dans une mémoire d'un dispositif externe au circuit de vérification, le circuit à fonction physiquement non clonable étant en outre configuré pour générer la valeur de référence à partir du logiciel et de l'image, le circuit de vérification étant en outre configuré pour stocker la valeur de référence dans une deuxième mémoire non volatile.

Selon un mode de réalisation, le circuit à fonction physiquement non clonable est configuré pour générer la valeur de référence lors du chargement du logiciel dans la première mémoire, le circuit de vérification étant en outre configuré pour stocker la valeur de référence dans la première mémoire.

Selon un mode de réalisation, le circuit à fonction physiquement non clonable est configuré pour implémenter une fonction physiquement non clonable robuste.

Un mode de réalisation prévoit un système d'initialisation d'un dispositif, le système comprenant :
- le circuit ci-dessus ;
- un dispositif externe au circuit ; et
- une mémoire d'un dispositif externe configurée pour stocker une image de la fonction réalisée par le circuit à fonction physiquement non clonable, le dispositif externe étant configuré pour générer la valeur de référence sur la base de l'image de la fonction réalisée par le circuit à fonction physiquement non clonable.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1 est un graphe illustrant un exemple d'un flot de contrôle d'une succession de suites d'instructions d'un logiciel ;
la figure 2 est un schéma par blocs illustrant une fonction physiquement non clonable ;
la figure 3 représente, de façon très schématique et sous forme de blocs, un dispositif électronique comprenant un circuit intégré selon un mode de réalisation de la présente description ;
la figure 4 est un organigramme représentant des opérations d'un procédé de vérification d'intégrité de logiciels selon un exemple de la présente description ;
la figure 5 est un organigramme représentant des opérations d'un procédé de vérification d'intégrité des logiciels selon un autre exemple de la présente description ;
la figure 6A représente une première étape d'un procédé de vérification d'intégrité d'un logiciel selon un premier mode de réalisation de la présente description ;
la figure 6B représente une deuxième étape d'un procédé de vérification d'intégrité d'un logiciel selon un premier mode de réalisation de la présente description ;
la figure 6C représente une troisième étape d'un procédé de vérification d'intégrité d'un logiciel selon un premier mode de réalisation de la présente description ;
la figure 7A représente une première étape d'un procédé de vérification d'intégrité d'un logiciel selon un autre mode de réalisation de la présente description ;
la figure 7B représente une deuxième étape d'un procédé de vérification d'intégrité d'un logiciel selon un autre mode de réalisation de la présente description ;
la figure 8 représente, de façon très schématique et sous forme de blocs, une implémentation logicielle d'un processeur selon un mode de réalisation de la présente description ; et
la figure 9 représente, de façon très schématique et sous forme de blocs, une implémentation matérielle d'un circuit intégré selon un mode de réalisation de la présente description.

### Description des modes de réalisation

De mêmes éléments ont été désignés par de mêmes références dans les différentes figures. En particulier, les éléments structurels et/ou fonctionnels communs aux différents modes de réalisation peuvent présenter les mêmes références et peuvent disposer de propriétés structurelles, dimensionnelles et matérielles identiques.

Par souci de clarté, seuls les étapes et éléments utiles à la compréhension des modes de réalisation décrits ont été représentés et sont détaillés. En particulier, la conception de dispositifs électroniquement est bien connue de la personne du métier et certains éléments n'ont pas été détaillés dans la description qui suit.

Sauf précision contraire, lorsque l'on fait référence à deux éléments connectés entre eux, cela signifie directement connectés sans éléments intermédiaires autres que des conducteurs, et lorsque l'on fait référence à deux éléments reliés (en anglais "coupled") entre eux, cela signifie que ces deux éléments peuvent être connectés ou être reliés par l'intermédiaire d'un ou plusieurs autres éléments.

Dans la description qui suit, lorsque l'on fait référence à des qualificatifs de position absolue, tels que les termes "avant", "arrière", "haut", "bas", "gauche", "droite", etc., ou relative, tels que les termes "dessus", "dessous", "supérieur", "inférieur", etc., ou à des qualificatifs d'orientation, tels que les termes "horizontal", "vertical", etc., il est fait référence sauf précision contraire à l'orientation des figures.

Sauf précision contraire, les expressions "environ", "approximativement", "sensiblement", et "de l'ordre de" signifient à 10 % près, de préférence à 5 % près.

Une fonction physiquement non clonable (PUF, de l'anglais « Physically Unclonable Function ») est l'expression d'une caractéristique spécifique d'un objet physique tel qu'un circuit intégré. Cette caractéristique repose sur des facteurs physiques aléatoires introduits lors de la fabrication du circuit et restants immuable durant la vie du circuit. Ces facteurs produisent des variations distinctes d'un circuit à l'autre. L'expression d'une PUF dépend du caractère unique de la microstructure physique du circuit associé. Cette microstructure dépend de facteurs physiques aléatoires introduits lors de la fabrication du circuit. Ces facteurs sont imprévisibles et incontrôlables, ce qui rend pratiquement impossible la duplication ou le clonage de la structure.

Le terme « fonction » est utilisé, car on exploite une caractéristique en évaluant la réponse d'une instance d'un objet à une entrée, appelé « défi » (« challenge » en anglais), donnée. On peut alors caractériser la PUF à partir d'un ensemble de couples challenge-réponse. La réponse d'une PUF est unique et imprédictible.

On distingue deux types de PUF : une PUF faible (en anglais « weak PUF ») et une PUF robuste (en anglais « strong PUF »). Une PUF faible est une PUF qui a un nombre peu élevé de couples défi-réponse (voire un seul couple) alors qu'une PUF robuste a un nombre très élevé de couples défi-réponse, par exemple au moins 2³² couples défi-réponse.

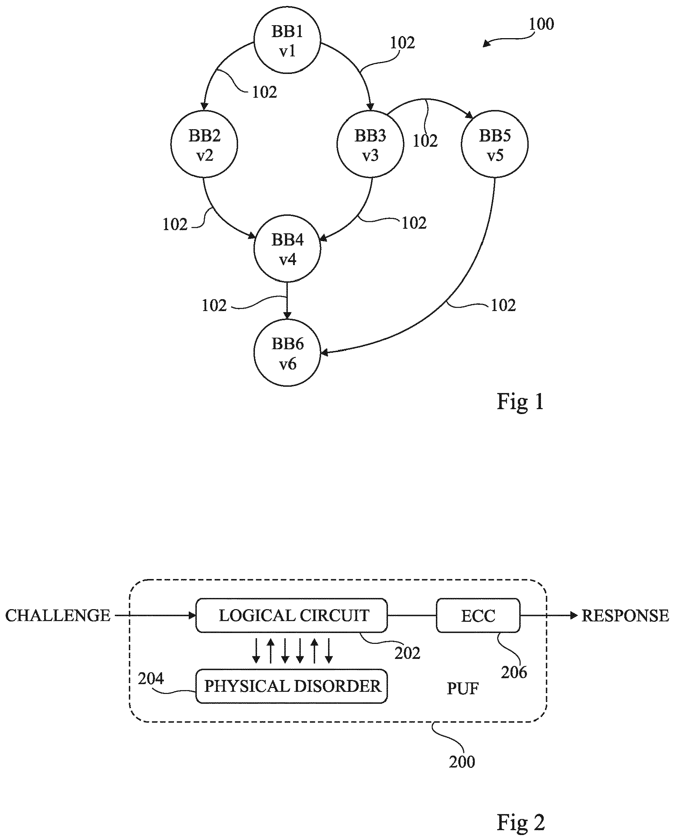

La figure 1 est un graphe illustrant un exemple d'un flot de contrôle 100 d'une succession de suites d'instructions d'un logiciel.

A titre d'exemple, un logiciel, représenté par le graphe 100, est divisé en six blocs de base (« basic block » en anglais) BBi, i étant un entier entre 1 et 6. Chaque bloc de base correspond à un sommet vi du graphe 100.

Chaque bloc de base est une suite linéaire d'instructions consécutives du logiciel ne contenant aucune branche sauf à la toute fin. Ainsi, un bloc de base est toujours exécuté séquentiellement et de manière unitaire.

Lors de l'exécution de la suite d'instructions d'un bloc de base, aucune instruction du logiciel extérieure à ce bloc de base ne peut être exécutée.

Lorsque deux blocs de base sont reliés par une flèche 102, représentant une arête du graphe 100, un transfert de contrôle peut avoir lieu. A titre d'exemple, une arête relie le bloc de base BB2 au bloc de base BB1. Un transfert de contrôle peut alors avoir lieu entre le bloc de base BB1 vers le bloc de base BB2.

Ainsi le graphe de flot de contrôle 100 illustre les chemins d'exécutions du logiciel possibles.

Des techniques de vérification d'intégrité du flot de contrôle permettent de vérifier qu'un chemin exécuté est conforme au graphe de flot de contrôle correspondant. Dans certaines solutions, les vérifications sont effectuées selon le graphe de flot de contrôle afin de garantir que chaque bloc de base du graphe est correctement exécuté par le processeur et que chaque transition d'un bloc de base vers un autre bloc de base correspond bien à une arête du graphe.

Des solutions existent afin de calculer des valeurs de référence utilisées pour la vérification. Les valeurs de référence sont par exemple précalculées avant l'exécution du logiciel, par exemple lors de sa programmation. A chaque exécution du logiciel, ces données sont recalculées pour être comparées avec les valeurs de référence précalculées. Si un bloc de base a été modifié ou si un transfert de contrôle invalide a été effectué, les données recalculées ne correspondent pas aux valeurs de références, et le dispositif déclenche par exemple un signal d'alarme.

A titre d'exemple, pour chaque bloc de base, une valeur de référence est calculée sur la base de la suite d'instructions constituant le bloc de base. A titre d'exemple, la valeur de référence est une valeur signature ou une somme de contrôle (en anglais « checksum »).

La figure 2 est un schéma par blocs illustrant une fonction physiquement non clonable (PUF).

A titre d'exemple, un circuit intégré 200 comprend un circuit logique 202 (LOGICAL CIRCUIT). Le circuit logique 202 reçoit par exemple un défi (CHALLENGE) et retourne une réponse (RESPONSE) dépendant du défi et d'un ou plusieurs paramètres physiques ou analogiques 204 (PHYSICAL DISORDER). Le ou les paramètres 204 représentent au moins une variation physique ayant par exemple lieu lors de la fabrication du circuit 200. A titre d'exemple, le ou les paramètres 204 sont liés à la fabrication d'un composant semiconducteur du circuit 200. Ainsi pour une même entrée, la réponse générée sera différente d'un circuit intégré 200 à un autre. De plus, la réponse de la PUF étant basée sur un aléa de fabrication, il n'y a aucune corrélation entre deux sorties, résultant de deux défis différents.

Le ou les paramètres physiques ou analogiques sur lequel une PUF est basée peuvent être sensibles aux conditions extérieures telles que par exemple la température ou l'humidité ainsi que par exemple au vieillissement du circuit 200. Afin de pallier à l'influence de ces conditions sur la génération de la réponse, le circuit logique 202 fournit par exemple une première réponse à un circuit additionnel (ECC) 206 configurer pour corriger la première réponse et fournir la réponse. A titre d'exemple le circuit additionnel 206 comprend un code de correction d'erreurs (ECC - de l'anglais « Error Correction Code »). Il existe également des PUFs, par exemple connues par la personne du métier sous le nom de « digital PUFs », qui ne sont pas sensibles à ces perturbations et qui ne nécessitent donc pas de correction.

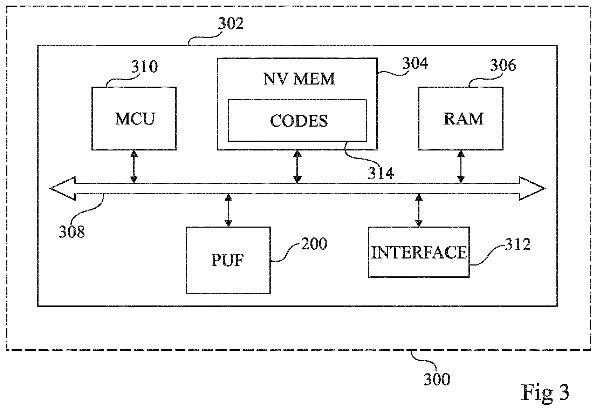

La figure 3 représente, de façon très schématique et sous forme de blocs, un dispositif électronique 300 comprenant un circuit intégré 302 selon un mode de réalisation de la présente description.

Le dispositif électronique 300 est par exemple une carte électronique telle qu'une carte à microcircuits, un matériel à usage informatique, un circuit à microprocesseur, etc.

Le circuit intégré 302 comprend par exemple une mémoire non volatile 304 (NV MEM), par exemple une mémoire flash et une mémoire volatile 306 (RAM), par exemple une mémoire à accès aléatoire (de l'anglais « Random Acces Memory »). Les mémoires 304 et 306 sont par exemple reliées, par l'intermédiaire d'un bus 308, à un processeur 310 (MCU). Le bus 308 comprend par exemple un bus de données et un bus de commande. Dans un autre exemple, le bus 308 est une interface SPI (de l'anglais « Serial Peripheral Interface ») ou un bus I2C (de l'anglais « Inter-Integrated Circuit »).

Le circuit intégré 302 comprend par exemple le circuit 200 (PUF) implémentant une fonction physiquement non clonable, par exemple une fonction physiquement non clonable robuste, relié au bus 308. Le circuit intégré 302 comprend par exemple en outre une interface 312 (INTERFACE).

La mémoire non volatile 304 comprend par exemple des logiciels 314 (CODES), tels que par exemple des codes de démarrage et/ou des codes applicatifs du dispositif 300.

Selon un mode de réalisation, avant l'exécution des logiciels 314, par exemple juste après l'installation des logiciels 314 dans la mémoire non volatile 304 ou suite à chaque démarrage du processeur 310, des valeurs de références des logiciels 314 sont calculées par la PUF 200 à partir de valeurs générées sur la base des logiciels 314. A titre d'exemple, les valeurs de référence sont calculées par application de la PUF 200 aux sommes de contrôle d'un ou plusieurs opérandes d'un ou plusieurs blocs de base des logiciels 314. A titre d'exemple, les valeurs de références calculées sont ensuite stockées dans la mémoire volatile 306. Lors de l'exécution du logiciels 314, des valeurs de vérification sont calculées, par application de la PUF 200 aux valeurs générées à partir des logiciels chargés dans la mémoire volatile 306. Les valeurs de vérification ainsi obtenues sont comparées aux valeurs de références préalablement stockées, par exemple, dans la mémoire volatile 306.

Selon un autre mode de réalisation, une image de la PUF 200, comprenant l'intégralité des paires défi-réponse de la PUF 200, est stockée dans une mémoire d'un dispositif externe, tel que par exemple une base de données (non illustrée) du dispositif 300. L'image est par exemple stockée dans la mémoire du dispositif externe avant l'installation des logiciels 314 dans la mémoire non volatile 304. Après l'installation des logiciels 314 dans la mémoire non volatile 304, des valeurs de référence sont par exemple obtenues suite à une requête à la mémoire du dispositif externe et sont stockées dans la mémoire non volatile 304. Lors du chargement des logiciels 314 dans la mémoire volatile 306, des valeurs de vérification sont ensuite calculées, par application de la PUF 200 aux valeurs générées à partir des logiciels chargés dans la mémoire volatile 306 et sont comparées aux valeurs de référence stockées dans la mémoire non volatiles 304.

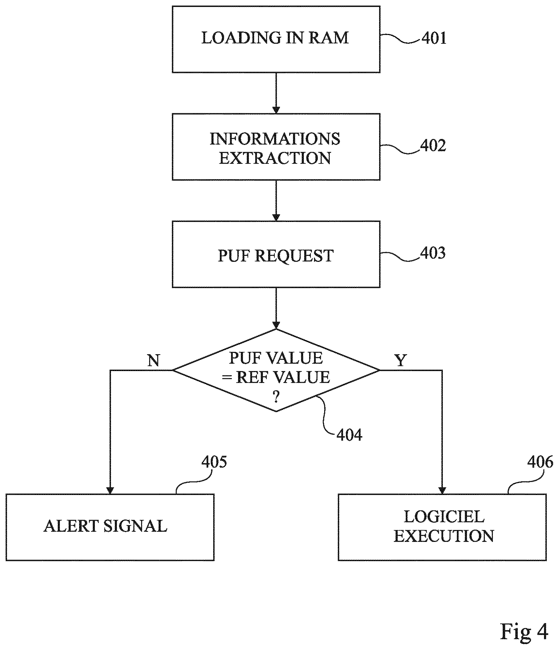

La figure 4 est un organigramme représentant des opérations d'un procédé de vérification d'intégrité de logiciels selon un exemple de la présente description.

Dans une première étape 401 (LOADING IN RAM), les logiciels 314 sont par exemple chargés de la mémoire non volatile 304 vers la mémoire volatile 306 dans le but d'être exécutés. Afin de vérifier l'intégrité des logiciels 314, une valeur associée aux logiciels 314 est par exemple générée par le processeur 310 dans une étape 402 (INFORMATIONS EXTRACTION).

A titre d'exemple, la valeur est générée à partir d'une section des logiciels 314 correspondant par exemple à une suite d'instructions et/ou d'opérandes d'un bloc de base du graphe de flot de contrôle décrivant les logiciels 314.

A titre d'exemple, la valeur générée correspond à une somme de contrôle suite d'instructions et/ou d'opérandes des logiciels 314.

Une valeur de vérification est ensuite obtenue, dans une étape 403 (PUF REQUEST). La valeur de vérification est par exemple obtenue en fournissant la valeur générée par le processeur 310 comme défi à la PUF 200.

Dans une étape 404 (PUF VALUE = REF VALUE ?), la valeur de vérification obtenue dans l'étape 403 est comparée, par exemple par le processeur 310, avec la valeur de référence stockée dans la mémoire non volatile 304 ou dans la mémoire volatile 306. A titre d'exemple, un identifiant est attribué à chaque bloc de base et chaque valeur de référence est stockée en association avec l'identifiant du bloc de base qu'elle protège. Lors de l'exécution de l'étape 404, le processeur 110 utilise par exemple l'identifiant de la partie du logiciel considérée pour retrouver la valeur de référence correspondante dans la mémoire. Dans un autre exemple, le logiciel est instrumenté en amont afin d'y incorporer les valeurs de référence. Dans cet exemple, les valeurs de référence n'ont pas besoin d'être stockées dans une mémoire du dispositif 300.

Dans le cas où, lors de l'exécution de l'étape 404, la valeur de vérification diffère de la valeur de référence (branche N), cela traduit le fait que la section des logiciels 314 vérifiée ne correspond pas à ce qu'elle devrait être. Le procédé continue dans une étape 405 (ALERT SIGNAL) dans laquelle le circuit intégré 302 génère par exemple un signal d'alerte. A titre d'exemple le signal d'alerte interrompt l'exécution des logiciels chargés dans la mémoire volatile 306.

Dans le cas où, lors de l'exécution de l'étape 404, il est déterminé que la valeur de vérification est égale à la valeur de référence (branche Y), le procédé continue dans une étape 406 (LOGICIEL EXECUTION) dans laquelle la section des logiciels 314 vérifiée est exécutée par le processeur 310.

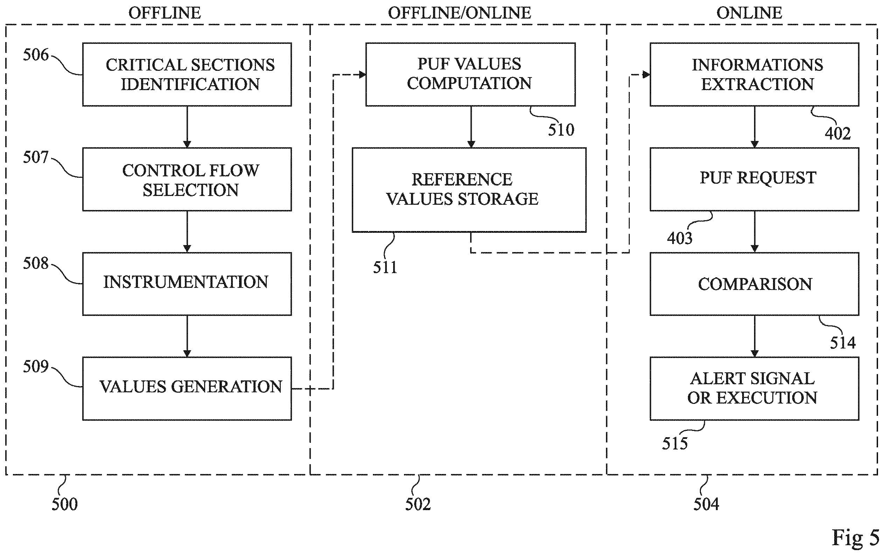

La figure 5 est un organigramme représentant des opérations d'un procédé de vérification d'intégrité des logiciels 314 selon un autre exemple de la présente description.

En particulier le procédé de vérification d'intégrité illustré en figure 5 comprend trois phases 500 (OFFLINE), 502 (OFFLINE/ONLINE) et 504 (ONLINE).

La phase 500 est par exemple réalisée par le dispositif 300 directement suite à l'installation des logiciels 314 dans la mémoire non volatile 304. Dans d'autres modes de réalisation, la phase 500 est réalisée par le dispositif externe au dispositif 300 comprenant la mémoire dans laquelle est sauvegardée une image de la PUF 200. La phase 500 comprend par exemple des étapes 506, 507, 508 et 509.

Dans l'étape 506 (CRITICAL SECTIONS IDENTIFICATION), des sections à surveiller des logiciels 314 sont identifiées. Une section correspond par exemple à une suite d'instructions ou d'opérandes formant un bloc de base des logiciels 314. A titre d'exemple les sections concernées présentent un contenu sensible et/ou critique en termes de confidentialité. Dans certains modes de réalisation, la totalité des logiciels 314 est définie comme étant critique, et la réalisation de l'étape 506 est alors facultative.

Dans l'étape 507 (CONTROL FLOW SELECTION), un flot de contrôle des sections identifiées dans l'étape 506 et en accord avec le graphe de contrôle de flot est sélectionné.

Dans l'étape 508 (INSTRUMENTATION), les sections des logiciels 314 identifiées dans l'étape 506 sont par exemple instrumentées. Dans un autre exemple, la totalité des logiciels 314 est instrumentée. L'instrumentation de la totalité des logiciels 314, ou des sections critiques des logiciels 314, consiste en l'ajout d'instructions permettant la mise en oeuvre du procédé de vérification décrit en relation avec la figure 4. A titre d'exemple, ces instructions sont ajoutées à chaque bloc de base des logiciels 314 ou uniquement aux sections de logiciel identifiées dans l'étape 506.

Dans l'étape 509 (VALUES GENERATION), des valeurs, telles que par exemple des sommes de contrôle, sont générées, par exemple par le processeur 310, pour chaque section des logiciels 314 instrumentée. Bien que l'exemple dans lequel les valeurs générées correspondent aux sommes de contrôle des suites d'instructions, le calcul d'autres valeurs, permettant la caractérisation d'une suite d'instructions, est bien sûr envisageable. A titre d'exemple, les valeurs de référence sont générées suite à l'application d'une fonction de hachage prenant par exemple en entrée la suite d'instructions composant chaque bloc de base ou chaque section du logiciel à protéger. Dans d'autres exemples, les valeurs de référence sont générées par application de techniques de contrôle de flot d'intégrité (CFI, de l'anglais « Control-Flow Integrity ») connues par la personne du métier.

La phase 502 correspond en l'obtention des valeurs de référence par application de la PUF 200 et leur stockage. La phase 502 est par exemple réalisée par le dispositif 300. Dans d'autres modes de réalisation, la phase 502 est réalisée par le dispositif externe. La phase 502 comprend par exemple des étapes 510 et 511.

Dans l'étape 510 (PUF VALUES COMPUTATION), les valeurs générées dans l'étape 509 sont par exemple fournies comme défi à la PUF 200. La PUF 200 génère alors, une à une, des valeurs de référence correspondants aux réponses correspondantes aux valeurs générées fournies. Ainsi, pour deux dispositifs électroniques 300 distincts comportant les mêmes logiciels 314, les valeurs générées par le processeur 310 à partir d'une même suite d'instructions seront les mêmes, mais les réponses des deux PUFs 200 seront différentes.

Dans un autre exemple, dans le cas où, dans l'étape 510, les valeurs sont générées par le dispositif externe, le dispositif externe est par exemple configuré pour communiquer avec la mémoire du dispositif externe dans laquelle est sauvegardée une image de la PUF 200. Le dispositif externe est alors configuré pour déterminer la valeur de réponse de la PUF 200 lorsque le défi correspond aux valeurs générées.

Dans l'étape 511 (REFERENCE VALUES STORAGE), les valeurs de référence sont ensuite stockées dans une mémoire du dispositif 300. A titre d'exemple, chaque valeur de référence est stockée en association avec un identifiant de la section du logiciel qu'elle protège. Dans un autre exemple, le logiciel est instrumenté en amont afin d'y incorporer les valeurs de référence. Dans cet exemple, les valeurs de référence n'ont pas besoin d'être stockées dans une mémoire du dispositif 300.

Selon un mode de réalisation, les valeurs de référence sont stockées dans la mémoire non volatile 304. La phase 502 est alors dite « hors-ligne » (OFFLINE). Le stockage des valeurs de références dans la mémoire non volatile 304 est par exemple réalisé lorsqu'une image de la PUF 200 a par exemple été sauvegardé dans une mémoire du dispositif externe. Les valeurs de référence correspondent alors à la version des logiciels 314 stockée dans la mémoire non volatile.

Selon un autre mode de réalisation, les valeurs de référence sont stockées dans la mémoire volatile 306. La phase 502 est alors dite « en-ligne » (ONLINE), c'est à dire qu'elle est réalisée lors de chaque chargement des logiciels 314 dans la mémoire volatile 306, par exemple à chaque démarrage du dispositif 300. Les valeurs de référence correspondent alors à la version des logiciels 314 chargée dans la mémoire volatile 306. Lorsque la phase 502 est réalisée « en-ligne », les valeurs de référence peuvent varier d'un démarrage du dispositif 300 à l'autre. Cela est par exemple possible en variant les sections identifiées lors de l'étape 506, et/ou en introduisant d'autres variations dans le calcul des valeurs de référence.

La phase 504 (ONLINE) correspond à la vérification de l'intégrité des logiciels 314 avant leur exécution. Les logiciels 314 sont alors dans la mémoire volatile 306 qui est par exemple une mémoire moins sécurisée que la mémoire non volatile 304. La phase 504 comprend par exemple les étapes 402 et 403 ainsi que des étapes 514 et 515.

La phase 504 comprend la suite d'étapes 402 et 403 de la figure 4 dans lesquelles une ou plusieurs valeurs sont générées, par exemple par le processeur 310 et à partir d'une des sections des logiciels 314 ayant été instrumentées dans l'étape 508. Ces valeurs correspondent par exemple à la somme de contrôle de la section des logiciels 314 considérée. La valeur de vérification correspondante est ensuite obtenue, par exemple en fournissant la ou les valeurs générées dans l'étape 402 comme valeurs de défi à la PUF 200. La valeur de vérification correspond alors à la réponse retournée par la PUF 200.

L'étape 514 (COMPARISON) est identique à l'étape 404 et consiste en la comparaison de la valeur de vérification obtenue dans l'étape 403 avec la valeur de référence correspondante à la section des logiciels 314 considérée et stockée dans la mémoire 304 ou 306 lors de l'étape 511.

L'étape 515 (ALERT SIGNAL OR EXECUTION) correspond à l'étape 405 ou à l'étape 406 selon le résultat de la comparaison effectuée dans l'étape 514.

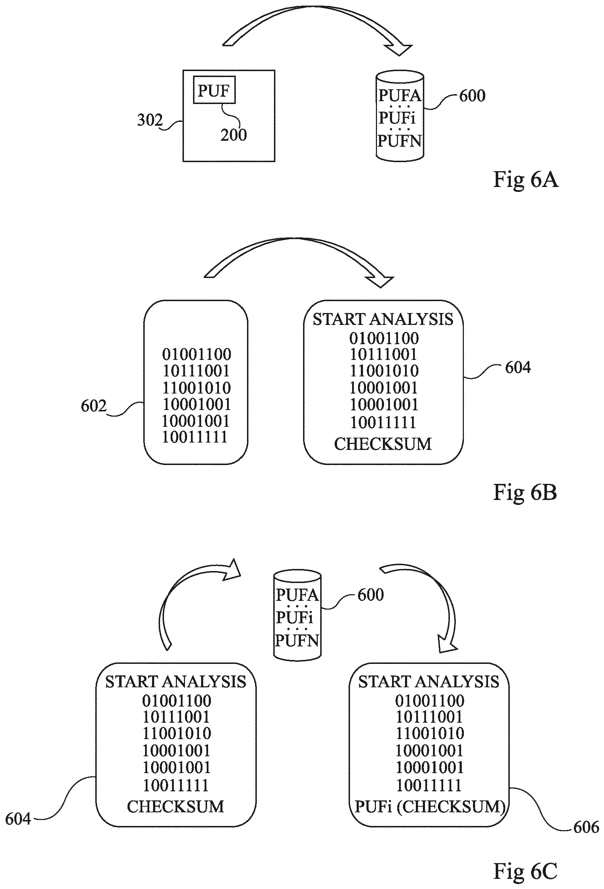

Les figures 6A à 6C représentent des étapes du procédé de vérification d'intégrité d'un logiciel selon le mode de réalisation dans lequel une image de la PUF 200 est sauvegardée dans une mémoire d'un dispositif externe.

La figure 6A représente une première étape d'un procédé de vérification d'intégrité des logiciels 314. En particulier, la figure 6A représente l'étape de sauvegarde d'une image de la PUF 200 du circuit 302 dans une mémoire 600 d'un dispositif externe. Cette étape est par exemple réalisée par le dispositif externe (non illustré).

A titre d'exemple la mémoire 600 du dispositif externe est une base de données contenant une pluralité d'images de PUF (PUF A, PUF i, PUF N) venant d'une pluralité de circuits semblables au circuit 302. L'image de la PUF 200 est par exemple stockée en association avec un identificateur (PUF i) de la PUF 200.

L'image de la PUF 200 contenue dans la mémoire 600 du dispositif externe comprend par exemple l'ensemble des pairs défi-réponse associées à la PUF 200.

Cette étape de sauvegarde de l'image de la PUF 200 dans la mémoire 600 du dispositif externe est par exemple réalisée avant la programmation des logiciels 314. Cette étape est par exemple réalisée directement suite à la fabrication du circuit 302.

La figure 6B représente une deuxième étape d'un procédé de vérification d'intégrité des logiciels 314. Cette étape est par exemple réalisée par le dispositif externe.

A titre d'exemple, la figure 6B illustre l'étape 508 de la figure 5 d'instrumentation des logiciels 314. Lors de la réalisation de l'étape 506 de la figure 5, une section critique 602 est par exemple identifiée. L'instrumentation de la section 602 consiste par exemple en l'ajout d'une instruction START ANALYSIS, indiquant par exemple que les lignes d'instructions suivant cette instruction vont être analysées. L'instrumentation de la section 602 consiste par exemple en outre en l'ajout d'une instruction CHECKSUM permettant la génération d'une valeur, correspondant par exemple à la somme de contrôle de la suite d'instructions contenue entre l'instruction START ANALYSIS et l'instruction CHECKSUM. Un code 604 illustre la version instrumentée du code 602.

La figure 6C représente une troisième étape d'un procédé de vérification d'intégrité des logiciels 314.

A titre d'exemple, la figure 6C illustre une réalisation « hors-ligne » des étapes 508 à 510 de la figure 5.

A titre d'exemple, le dispositif externe est configuré pour générer une valeur à partir de la section instrumentée 604, telle que par exemple la somme de contrôle de la section 604. Le dispositif externe est par exemple configuré pour transmettre la valeur générée en association de l'identificateur PUF i de la PUF 200 à la mémoire 600 du dispositif externe afin de déterminer la valeur de réponse de la PUF 200 lorsque le défi correspond à la valeur générée.

La valeur de réponse est transmise, par le dispositif externe au dispositif électronique 300. La valeur de réponse est alors par exemple stockée dans la mémoire non-volatile 304 comme valeur de référence pour la section 602.

En outre, le dispositif externe est par exemple configuré pour modifier la section 604 en une section 606 en remplaçant par exemple l'instruction CHECKSUM par une instruction PUFi(CHECKSUM). La section 606 est ensuite transmise au dispositif 300 et stockée, par exemple, dans la mémoire non volatile 304. La modification a pour effet de commander, lors d'une compilation de la section 606, le calcul par la PUF 200 du dispositif 300 de la réponse correspondante au défi CHECKSUM.

Ce mode de réalisation permet par exemple à un utilisateur de protéger un logiciel qu'il ajouterait, par exemple dans une étape de personnalisation du dispositif 300.

Selon ce mode de réalisation, la vérification d'intégrité effectuée dans la phase 504 se fait entre la version des logiciels 314 stockée dans la mémoire volatile 304 avec celle chargée dans la mémoire volatile 306. Ce mode de réalisation permet donc de détecter des attaques sur la mémoire non volatile 304.

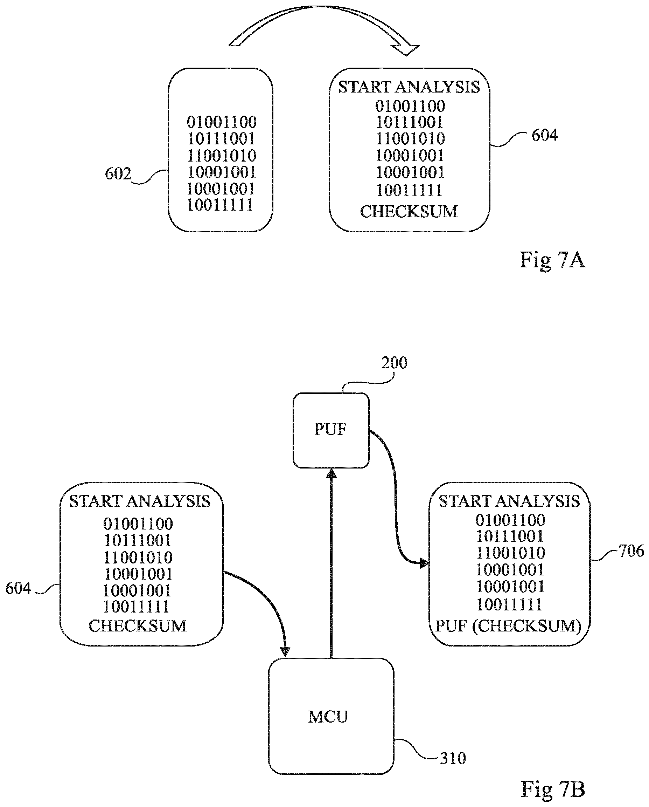

Les figures 7A et 7B représentent des étapes du procédé de vérification d'intégrité selon le mode de réalisation dans lequel les valeurs de référence sont calculée à chaque chargement des logiciels 314 dans la mémoire volatile 306.

La figure 7A représente une première étape d'un procédé de vérification d'intégrité des logiciels 314.

En particulier la figure 7A illustre l'étape d'instrumentation 508 de la section 602 en la section 604 et est identique à l'étape décrite en relation avec la figure 6B. Suite à l'étape d'instrumentation, la section 604 est par exemple stockée dans la mémoire non volatile 304.

La figure 7B représente une deuxième étape d'un procédé de vérification d'intégrité des logiciels 314.

A titre d'exemple, la figure 7B illustre une réalisation « en-ligne » de l'étape 510.

A titre d'exemple, lors du démarrage du dispositif 300, ou plus particulièrement lors du démarrage du processeur 310, les logiciels 314 sont lus dans la mémoire non volatile 304 et sont chargés dans la mémoire volatile 306. Durant le chargement, les suites d'instructions des logiciels 314 sont analysés, par exemple par un autre logiciel (non représenté), afin d'identifier les sections critiques, dont la section 602, identifiées, par exemple dans l'étape 506. Une valeur est générée, telle que par exemple la somme de contrôle, à partir de la section 604 et est transmise, par le processeur 310 à la PUF 200 du circuit 302. La valeur de réponse de la PUF 200 est ensuite stockée dans la mémoire volatile 306. En outre, la section 604 est par exemple modifiée en la section 706 pour inclure l'instruction PUF(CHECKSUM) commandant le calcul de la valeur de vérification de la section 602, en utilisant la PUF 200 du circuit 302. La section 706 est chargée dans la mémoire volatile 306 afin d'être exécutée, la compilation de la section 706 engendrant le calcul de la valeur de vérification.

Selon un mode de réalisation, le circuit 302 comprend en outre un générateur de nombre aléatoire (non représenté en figure 3). A titre d'exemple, à chaque démarrage du processeur 310, un nombre aléatoire est généré par le générateur de nombres aléatoires, le générateur de nombre aléatoire étant par exemple configuré pour ne jamais générer plusieurs fois de suite le même nombre aléatoire. A titre d'exemple, les étapes 403 et 511 comprennent la concaténation du nombre aléatoire avec la valeur générée à partir des sections 604 ou 706. Les défis fournis lors des étapes 403 et 511 à la PUF 200, et par conséquent les réponses correspondantes de la PUF 200, dépendent alors du démarrage de processeur 310.

Selon un mode de réalisation, le circuit 302 comprend en outre un chronomètre (en anglais « timer ») (non représenté), qui est par exemple réalisé par un compteur, et qui est configuré pour, lorsqu'un délai prédéfini est atteint, transmettre un signal au processeur 310. Par exemple, le chronomètre est cadencé par l'horloge système du dispositif 300. Le processeur 310 est alors par exemple configuré pour, lors de la réception de ce signal, vérifier que le calcul des valeurs de référence et/ ou de vérification a eu lieu. Cela permet de prévenir une modification, supprimant par exemple les instructions START VERIFY, CHECKSUM et/ou PUF(CHECKSUM) de la section instrumentée 604 lorsqu'elle est encore stockée dans la mémoire non volatile 304.

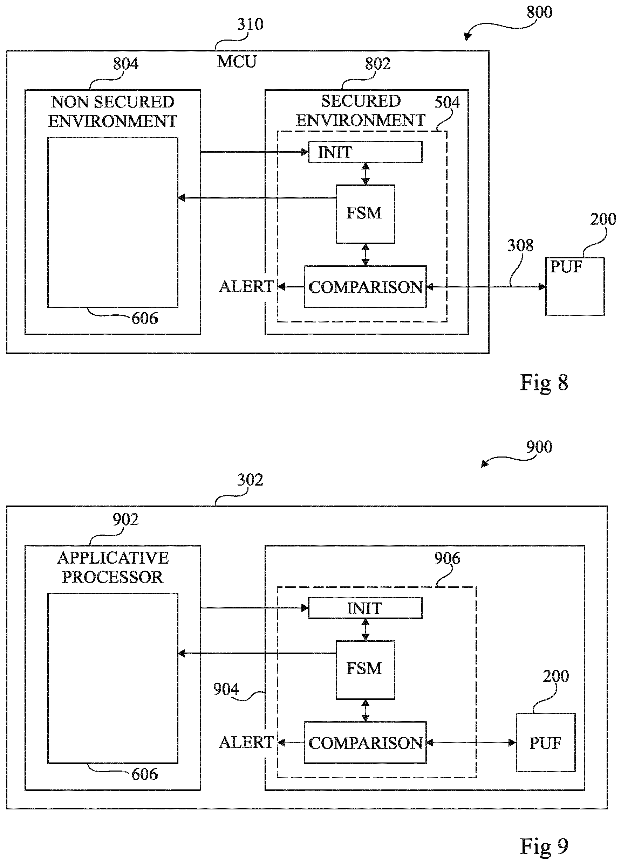

La figure 8 représente, de façon très schématique et sous forme de blocs, une implémentation logicielle 800 du processeur 310 selon un mode de réalisation de la présente description. En particulier l'implémentation logicielle 800 permet la mise en oeuvre du procédé de vérification décrit en relation avec la figure 4.

A titre d'exemple, le processeur 310 comprend une zone sécurisée 302 (SECURED ENVIRONMENT) et une zone non sécurisée 304 (NON SECURED ENVIRONMENT).

A titre d'exemple, lors de l'exécution des logiciels 314, la section instrumentée 606 est chargée dans la zone non sécurisée 804 du processeur 310. La phase 504 « en ligne » est alors mise en oeuvre de manière logicielle par la zone sécurisée 802.

A titre d'exemple, des informations relatives à la section 606 et/ou la section 706 sont transmises à la zone sécurisée 802, permettant l'initiation (INIT) de la phase 504. Une machine à états finis (FSM), par exemple implémentée de manière logicielle dans la zone sécurisé 802, permet alors le calcul d'une valeur, telle que la somme de contrôle du code 706 et/ou du code 706, et permet la vérification des informations du flot de contrôle de la section 606 et/ou de la section 706. La valeur générée par la machine à états finis est alors transmise à la PUF 200 par l'intermédiaire du bus 308 afin d'obtenir la valeur de vérification. La PUF 200 est alors implémentée de manière matérielle dans le circuit 302, mais à l'extérieur du processeur 310.

Lorsque la valeur de vérification, retournée par la PUF 200, par exemple par l'intermédiaire du bus 308, diffère de la valeur de référence, stockée par exemple dans la mémoire non volatile 304, la zone sécurisée 302 génère par exemple un signal d'alerte ALERT.

La figure 9 représente, de façon très schématique et sous forme de blocs, une implémentation matérielle 900 du circuit 302 selon un mode de réalisation de la présente description dans lequel le circuit est réalisé par un système sur puce (en anglais « System on Chip, SoC »). En particulier, l'implémentation matérielle 900 permet la réalisation du procédé de vérification décrit en relation avec la figure 4.

Le circuit 302 comprend par exemple un processeur applicatif 902 (APPLICATIVE PROCESSOR). A titre d'exemple, le processeur 310 décrit en relation avec la figure 3 implémente le processeur applicatif 902. Le circuit 302 comprend en outre une zone 904 comprenant la PUF 200. La zone 904 comprend en outre un ensemble 906 de sous circuits permettant l'implémentation matérielle de la phase 504. L'ensemble 906 est alors configuré pour extraire des informations de la section 606 et/ou de la section 706 chargée pour exécution dans le processeur applicatif 902. L'ensemble 906 est en outre configuré pour générer la valeur de vérification ainsi que pour la comparer avec la valeur de référence correspondante, par exemple stockée dans la mémoire volatile 306.

Un avantage des modes de réalisations décrits est que les valeurs de référence protégeant les sections critiques d'un ou plusieurs codes logiciels sont générées à partir de la fonction physiquement non clonable du dispositif associé. La fonction physiquement non clonable est telle que les valeurs de référence pour de mêmes codes logiciel sont différentes d'un dispositif à l'autre, ce qui permet une sécurisation individualisée de chaque dispositif électronique.

Un autre avantage des modes de réalisations décrits est que les valeurs de références d'un code logiciel ne sont pas liées par une même valeur de chiffrement. Au contraire, de par l'usage de la PUF, aucune valeur commune ne relie les valeurs de référence. Autrement dit, il n'y a aucune corrélation entre deux valeurs de référence. Ainsi, si un attaquant obtient une des valeurs de référence, il reste dans l'incapacité de modifier les sections du logiciel associées aux autres valeurs de référence.

Un autre avantage des modes de réalisation décrits est obtenu lorsque la PUF implémentée est une PUF robuste. L'ensemble des pairs « défi-réponse » étant de grande taille, il n'est pas possible pour un attaquant du dispositif de connaître la totalité de l'image de la PUF.

Un autre avantage des modes de réalisation décrits est que l'utilisation d'une mémoire d'un dispositif externe stockant une image du PUF permet également d'assurer l'authenticité des logiciels protégés.

Un autre avantage des modes de réalisation décrits est que, lorsque la phase 502 est réalisée en-ligne, les valeurs de référence peuvent différer d'un démarrage du dispositif à l'autre, complexifiant ainsi la tâche d'un attaquant.

Divers modes de réalisation et variantes ont été décrits. La personne du métier comprendra que certaines caractéristiques de ces divers modes de réalisation et variantes pourraient être combinées, et d'autres variantes apparaîtront à la personne du métier. En particulier, la phase 504 peut être implémentée de manière logicielle et matérielle.

Enfin, la mise en oeuvre pratique des modes de réalisation et variantes décrits est à la portée de la personne du métier à partir des indications fonctionnelles données ci-dessus. En particulier, pour ce qui est de la valeur servant de « défi » à la PUF, bien que l'exemple des sommes de contrôle est donnée, d'autres valeurs peuvent être utilisé comme « défi ».

## Revendications

1. Procédé de vérification, par un circuit de vérification, de l'intégrité d'un logiciel (314) :
- le chargement du logiciel dans une première mémoire volatile (306) ;
- le calcul d'une première valeur de vérification par le circuit de vérification ;
- le calcul d'une deuxième valeur de vérification en appliquant une fonction physiquement non clonable (200) à la première valeur de vérification ;
- la comparaison, par le circuit de vérification, de la deuxième valeur de vérification avec une valeur de référence ; et
- s'il est déterminé que la deuxième valeur de vérification diffère de la valeur de référence, la génération d'un signal d'avertissement en sortie du circuit de vérification.

2. Procédé selon la revendication 1 comprenant en outre, avant la vérification de l'intégrité du logiciel (314), l'obtention de la valeur de référence en appliquant la fonction physiquement non clonable (200) à une valeur générée à partir du logiciel.

3. Procédé selon la revendication 2, dans lequel, l'obtention de la valeur de référence en appliquant la fonction physiquement non clonable (200) comprend le stockage d'une image de la fonction physiquement non clonable dans une mémoire (600) d'un dispositif externe au circuit de vérification, et la génération de la valeur de référence à partir du logiciel et de l'image, le procédé comprenant en outre le stockage de la valeur de référence dans une deuxième mémoire non volatile (304).

4. Procédé selon la revendication 2, dans lequel l'obtention de la valeur de référence est effectuée lors du chargement du logiciel (314) dans la première mémoire (306) et dans lequel la valeur de référence est stockée dans la première mémoire.

5. Procédé selon la revendication 4, dans lequel, l'obtention de la valeur de référence se fait par application de la fonction physiquement non clonable (200) à une valeur d'entrée basée sur la valeur générée à partir du logiciel (314) et une valeur aléatoire.

6. Procédé selon la revendication 5, dans lequel la valeur aléatoire est égale à une première valeur lors d'un premier démarrage et égale à une deuxième valeur, différente de la première valeur, lors d'un deuxième démarrage du circuit de vérification.

7. Procédé selon l'une quelconque des revendications 1 à 6, comprenant en outre, avant le chargement du logiciel (314) dans la première mémoire (306), l'ajout d'une instruction de vérification au logiciel déclenchant le calcul de la première valeur de vérification.

8. Procédé selon la revendication 7, dans lequel le circuit de vérification implémente un compteur configuré pour indiquer qu'un délai après le chargement du logiciel (314) dans la première mémoire (306) est atteint, le circuit de vérification étant configuré pour vérifier, une fois le délai atteint, que l'instruction de vérification a été exécutée.

9. Procédé selon l'une quelconque des revendications 1 à 8, dans lequel la fonction physiquement non clonable (200) est une fonction physiquement non clonable robuste, propre au circuit de vérification.

10. Circuit comprenant :
- une première mémoire volatile (306) dans laquelle est chargé le logiciel ;
- un processeur (310) configuré pour calculer une première valeur de vérification ;
- un circuit à fonction physiquement non clonable (200) configuré pour générer une deuxième valeur de vérification basée sur la première valeur de vérification ; et
- un circuit de vérification configuré pour vérifier l'intégrité d'un logiciel (314) en comparant la deuxième valeur de vérification avec une valeur de référence et en générant, en sortie, un signal d'avertissement si la deuxième valeur de vérification diffère de la valeur de référence.

11. Circuit selon la revendication 10, dans lequel le circuit à fonction physiquement non clonable (200) est en outre configuré pour, avant la vérification de l'intégrité du logiciel, générer la valeur de référence sur la base d'une valeur générée par le processeur et à partir du logiciel (314).

12. Circuit selon la revendication 11, dans lequel, la génération de la valeur de référence par le circuit à fonction physiquement non clonable (200) comprend le stockage d'une image du circuit à fonction physiquement non clonable dans une mémoire (600) d'un dispositif externe au circuit de vérification, le circuit à fonction physiquement non clonable étant en outre configuré pour générer la valeur de référence à partir du logiciel (314) et de l'image, le circuit de vérification étant en outre configuré pour stocker la valeur de référence dans une deuxième mémoire non volatile (304).

13. Circuit selon la revendication 11, dans lequel le circuit à fonction physiquement non clonable (200) est configuré pour générer la valeur de référence lors du chargement du logiciel dans la première mémoire (306), le circuit de vérification étant en outre configuré pour stocker la valeur de référence dans la première mémoire.

14. Circuit selon l'une quelconque des revendications 10 à 13, dans lequel le circuit à fonction physiquement non clonable (200) est configuré pour implémenter une fonction physiquement non clonable robuste.

15. Système d'initialisation d'un dispositif, le système comprenant :
- le circuit selon l'une quelconque des revendications 10 à 12 et 14 ;
- un dispositif externe au circuit ; et
- une mémoire (600) d'un dispositif externe configurée pour stocker une image de la fonction réalisée par le circuit à fonction physiquement non clonable (200), le dispositif externe étant configuré pour générer la valeur de référence sur la base de l'image de la fonction réalisée par le circuit à fonction physiquement non clonable.
